Europäisches Patentamt

European Patent Office

Office européen des brevets

(11) Publication number: 0 330 975
A1

# EUROPEAN PATENT APPLICATION

(21) Application number: 89103027.2

(22) Date of filing: 21.02.89

(51) Int. Cl.⁴: **A01F 15/00** , **B65G 39/09**

(30) Priority: 29.02.88 GB 8804706

(43) Date of publication of application:
06.09.89 Bulletin 89/36

(84) Designated Contracting States:
**DE ES FR GB IT NL**

(71) Applicant: **DEERE & COMPANY**
**1 John Deere Road**
**Moline Illinois 61265(US)**

(72) Inventor: **Viaud, Jean**
**16, Rue de L'Ecole**
**F-57200 Sarreguemines(FR)**
Inventor: **Laberheim, René**
**38, Rue Principale**
**F-57720 Eschviller(FR)**

(74) Representative: **Collins, Geoffrey Stainton et al**
**c/o Reddie & Grose 16 Theobalds Road**
**London WC1X 8PL(GB)**

(54) Machine for forming cylindrical bales of crop.

(57) A roll (26) for supporting belts (24) defining the baling chamber of a machine for forming large cylindrical bales of crop is mounted by bearings (36) on an axial hexagonal shaft (34).

In order to protect each bearing (36) against ingress of foreign material, e.g. stray crop and dirt, an annular deflector (38) is provided on the outward vulnerable side of the bearing (36). This deflector (38) is made of plastics material. It is mounted on the shaft (34) and has a clearance of only about 0.2 mm from the inner face of the roll (26). The deflector (38) has a pair of side-by-side grooves (40) at its periphery opening toward the roll (26). Foreign material tends, in due course, to accumulate in these grooves (40) and then to act in a self-sealing manner against further ingress.

FIG. 2

## Machine for forming cylindrical bales of crop

This invention relates to a machine for forming cylindrical bales of crop, having a baling chamber defined by belts trained over rolls, at least one said roll being mounted by a bearing on a shaft extending axially of the roll for turning movement of the roll relative to the shaft, and an annular member being mounted on the shaft on the outward side of the bearing for preventing ingress of foreign material between the shaft and the roll to the bearing.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale. The chamber is defined by runs of belts trained over driven rolls.

Each roll is mounted on a stationary axial shaft by way of a bearing at either end portion thereof. In field conditions foreign material, e.g. stray crop and dirt, will tend to find its way between the shaft and roll to the bearing. In some machines it is usual to protect the bearing from ingress of such material by mounting a steel annular member in the form of a washer on the shaft at the outer vulnerable side of the bearing, the periphery of the washer clearing the inner face of the roll by about 1 mm. This clearance is necessary to ensure that there is no frictional contact with the roll which would create a fire hazard. On the other hand, such clearance can still at times enable sufficient foreign material to pass as to give a problem of fouling the bearing.

The present invention enables the bearing to be better protected from foreign material without an attendant significant fire hazard.

According to the invention the annular member is made of plastics material, is in contact with, or has minimal clearance of at most 0.5 mm from the roll, and has at its periphery a groove or grooves opening toward the roll.

If there is contact between the annular member and the inner face of the roll, this does not give rise to a fire hazard and since the clearance between the member and the roll is reduced the bearing is less prone to fouling. Foreign matter tends in due course to accumulate in the groove or grooves and then to act in a self-sealing manner against further ingress.

An embodiment of the invention will now be described with reference to the accompanying diagrammatic drawings in which:

Fig. 1 is a perspective view of a round baler shown generally in broken lines but with roll arrangements indicated in continuous lines;

Fig. 2 is a longitudinal cross section through an end portion of a roll arrangement of Fig. 1; and

Fig. 3 is an end view of the portion in Fig. 2 of the roll arrangement looking toward the right in that Figure.

In the drawings, the round baler is conventional apart from its roll arrangements and therefore will not be described in any detail.

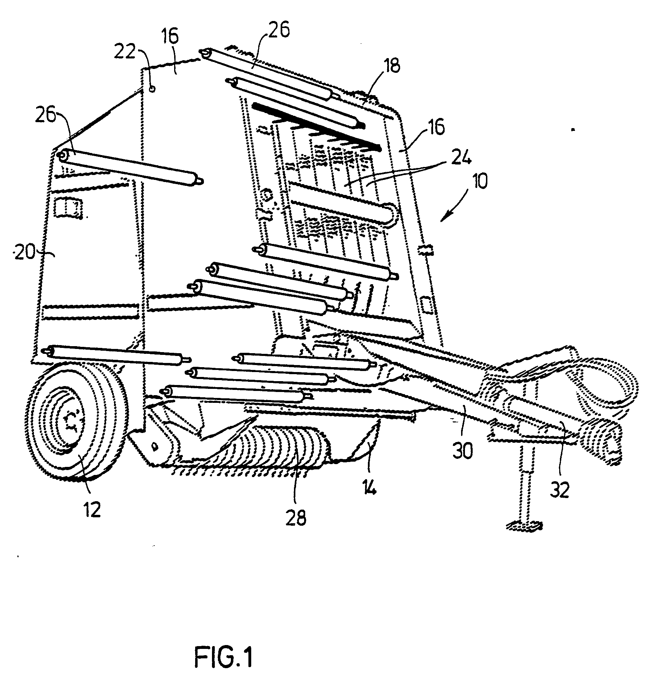

The machine, which is used for making large cylindrical bales of hay, includes a main frame 10 mounted on a pair of wheels 12, 14. The frame 10 has fore-and-aft extending walls 16 connected by transverse beams 18, and a gate 20 at the rear is swingable about a pivot axis 22 at the top of the baler to release a completed bale. The bale is formed in a baling chamber defined by upwardly extending runs (not shown) of six rubber belts 24 trained side-by-side over rolls 26 which are disposed in a conventional array some only of which are illustrated (in full line) in Fig. 1. The ends of the baling chamber are formed by the side walls 16 and gate 20, and the chamber has a crop inlet on the underside of the machine fed by a pick-up 28. A draft tongue 30 is connected at the front of the baler to the frame 10 and extends forwardly for attaching the machine to a tractor which draws it. Drive for the rolls 26 is transmitted from the tractor via a shaft 32.

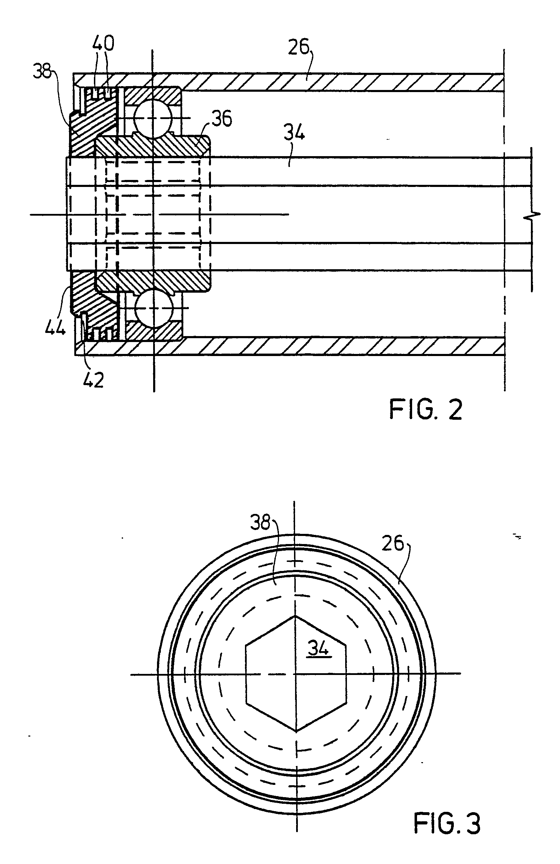

The rolls 26 are each mounted on a stationary hexagonal axial shaft 34 via a bearing 36 at either end portion thereof as shown in Fig. 2. The siting of the bearings 36 makes them particularly susceptible to fouling by stray crop wrapped round the roll and shaft ends and by dirt. To prevent, or at least to reduce, this difficulty an annular member in the form of a deflector 38 is mounted, outwardly of the bearing, on the shaft 34 and extends to the inner face of the roll 26 so that it has minimal clearance therewith. In practice, this clearance is about 0.2 mm. The deflector 38 is made of a plastics material, and in particular polyamide-66 has been found appropriate. At its radially outer periphery the deflector 38 is provided with two outwardly opening grooves disposed side-by-side in the lengthwise direction of the roll 26. The deflector 38 also has a prising shoulder 42 on its exposed face 44 to enable easy removal of the deflector for service access to the bearing 36.

In use it is difficult for foreign material to find its way past the deflector 38, through the slight clearance with the roll 26, to the bearing 36 and initially any material which does enter the clearance tends to accumulate in the grooves 40 and to agglomerate and thereby to have a self-sealing effect. If the deflector 38 does contact the turning roll 26 there is substantially no risk of fire.

Claims

1. A machine for forming cylindrical bales of crop having a baling chamber defined by belts (24) trained over rolls (26), at least one said roll (26) being mounted by a bearing (36) on a shaft (34) extending axially of the roll (26) for turning movement of the roll (26) relative to the shaft (34) and an annular member (38) on the outward side of the bearing (36) for preventing ingress of foreign material between the shaft (34) and the roll (26) to the bearing (36) characterised in that the annular member (38) is made of plastics material, is in contact with, or has minimal clearance of at most 0.5 mm from the roll (26), and has at its periphery a groove or grooves (40) opening toward the roll (26).

2. A machine according to claim 1 characterised in that the said clearance is about 0.2 mm.

3. A machine according to claim 1 or 2 characterised in that the annular member (38) has a shoulder (42) on the outward face (44) thereof formed so as to enable prising of the annular member (38) thereby from the shaft (34).

FIG.1

8474

FIG. 2

FIG. 3

84:

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | EP-A-44660 ( AEROQUIP )<br>* page 4, line 2 - page 6; figures 1, 2 *<br>--- | 1 | A01F15/00<br>B65G39/09 |
| X | FR-A-1031627 (BIVOIT )<br>* page 1, column RH, line 13 - line 31; figure 1<br>*<br>----- | 1 | |

TECHNICAL FIELDS
SEARCHED (Int. Cl.4 )

A01F
B65G

The present search report has been drawn up for all claims

| Place of search | Date of completion of the search | Examiner |
|---|---|---|
| THE HAGUE | 31 MAY 1989 | VERMANDER R.H. |

EPO FORM 1503 03.82 (P0401)